# EUROPÄISCHE PATENTANMELDUNG

(11) **EP 1 185 010 A2**
(43) Veröffentlichungstag der Anmeldung: **06.03.2002**
(21) Anmeldenummer: 00125073.7
(22) Anmeldetag: 17.11.2000
(51) Int. Cl.: H04H 1/00

(54) **Verfahren zum Vorführen von Informationen, bei dem Informationen auf einem Computer gespeichert werden und auf einer Vorführvorrichtung vorgeführt werden und bei dem Zusatzinformationen mit Hilfe einer Sendevorrichtung und einer mit dem Computer verbundenen Empfangseinrichtung auf den Computer übertragen werden**

(30) Priorität: 29.08.2000 DE 10042321
(71) Anmelder: Trend Network AG, 40210 Düsseldorf (DE)
(72) Erfinder: Möller, Michael, 40625 Düsseldorf (DE); Schäffer, Christian, 86343 Königsbrunn (DE)
(74) Vertreter: Rox, Thomas Dr.

(57) **Zusammenfassung**

Die Erfindung betrifft ein Verfahren zum Vorführen von Informationen, vorzugsweise in einem bewegten Fahrzeug, bei dem Stamminformationen auf einem Computer gespeichert werden, die danach auf mindestens einer Vorführvorrichtung vorgeführt werden, bei dem das technische Problem, daß Informationen in hoher Qualität mit gleichzeitiger Aktualisierbarkeit und geringen Durchführungskosten vorgeführt werden können, dadurch gelöst ist, daß Zusatzinformationen mit Hilfe einer Sendevorrichtung und einer mit dem Computer verbundenen Empfangsvorrichtung auf den Computer übertragen werden, daß die Zusatzinformationen vom Computer ausgewertet werden, daß in Abhängigkeit von den Zusatzinformationen die auf der mindestens einen Vorführvorrichtung vorgeführten Informationen verändert werden, und daß die Zusatzinformationen über eine mittels einer mobilen Kommunikationseinrichtung erzeugten Verbindung mit dem Internet übertragen werden.

## Beschreibung

Die Erfindung betrifft ein Verfahren zum Vorführen von Informationen, insbesondere in einem bewegten Fahrzeug, bei dem Stamminformationen auf einem Computer gespeichert werden, die danach auf mindestens einer Vorführvorrichtung vorgeführt werden, bei dem Zusatzinformationen mit Hilfe einer Sendevorrichtung und einer mit dem Computer verbundenen Empfangsvorrichtung auf den Computer übertragen werden, bei dem die Zusatzinformationen vom Computer ausgewertet werden und bei dem in Abhängigkeit von den Zusatzinformationen die auf der mindestens einen Vorführvorrichtung vorgeführten Informationen verändert werden.

Ein derartiges Verfahren wird bisher insbesondere in überregionalen Zügen eingesetzt, wobei die Vorführvorrichtungen als Computerbildschirme ausgebildet sind, auf denen die Stamminformationen einem Benutzer dargestellt werden. Die Stamminformationen werden an vorgegebenen Standorten wie bspw. in einem Betriebshof auf den Computer übertragen und bleiben bis zu einem nächsten Aufenthalt an einem derartigen Standort unverändert, da während der Fahrt zwischen zwei Betriebshöfen kein weiterer Datenaustausch stattfindet. Daher können mit den aus dem Stand der Technik bekannten Verfahren lediglich Informationen mit einer Aktualität vorgeführt werden, die an den Zeitpunkt der Übertragung der Stamminformationen geknüpft ist.

Weiterhin ist ein Verfahren bekannt, bei dem in Haltestellen von Bussen und U-Bahnen Informationen auf Bildschirmen oder Leinwänden vorgeführt werden. Dieses Verfahren nutzt bestehende Telefonverbindungen für die Übertragung der Daten aus, wodurch ein Vorführen auch aktueller Informationen möglich ist. Jedoch benötigt dieses Verfahren in jedem Fall eine direkte Datenverbindung, so daß es insbesondere bei bewegten Fahrzeugen nur über mobile Telefonverbindungen anwendbar ist. Die Kosten des Verfahrens sind daher erheblich.

Ausgehend von diesem Stand der Technik liegt der vorliegenden Erfindung das technische Problem zugrunde, das Verfahren zum Vorführen von Informationen in einem bewegten Fahrzeug dahingehend zu verbessern, daß Informationen in hoher Qualität mit gleichzeitiger Aktualisierbarkeit und geringen Investitionskosten vorgeführt werden können.

Das zuvor aufgezeigte technische Problem ist erfindungsgemäß dadurch gelöst, daß die Zusatzinformationen über eine mittels einer mobilen Kommunikationseinrichtung erzeugten Verbindung mit dem Internet übertragen werden. Somit wird erstmals vorgeschlagen, daß für ein Verfahren der eingangs beschriebenen Art der Übertragungsweg über das Internet gewählt wird.

Dabei kommt dem erfindungsgemäßen Verfahren zugute, daß die Zusatzinformationen in ihrem Umfang erheblich geringer als die gesamten jeweils darzustellenden Informationen sind. Somit ist auch eine Mobilfunk-Übertragung mit begrenzten Übertragungsgeschwindigkeiten ausreichend. Die Internetverbindung kann dabei einem direkten Zugriff des die Staminformationen enthaltenen Computers auf eine vorgegebene Datenbank eines zentralen Rechners dienen. Ebenso ist ein Zugriff des zentralen Rechners auf den Computer über die Internetverbindung möglich.

Der Vorteil der Mobilfunk-Übertragung besteht dabei insbesondere darin, daß die Infrastruktur für die mobile Kommunikation besteht und somit keine eigens notwendigen Techniken installiert werden müssen. Somit kann das erfindungsgemäße Verfahren ohne große Investitionskosten bezüglich der Datenübertragungstechnik realisiert werden.

Dem erfindungsgemäßen Verfahren liegt weiterhin die Erkenntnis zugrunde, das lediglich ein Teil der vorgeführten Informationen regelmäßig aktualisiert werden muß, während der weitaus größte Teil der Informationen eine ausreichende Aktualität besitzt, um als Stamminformationen auf dem Computer gespeichert zu sein. Daher können die Stamminformationen in größeren Datenmengen gespeichert sein, so daß zumindest der weitaus größte Teil der vorgeführten Informationen eine hohe Vorführqualität besitzt. Lediglich die zu aktualisierenden Informationen müssen als Zusatzinformationen mit Hilfe der Sendevorrichtung und der Empfangsvorrichtung auf den Computer übertragen werden. Diese Zusatzinformationen werden dann dazu verwendet, die vorgeführten Informationen zu verändern, insbesondere zu aktualisieren.

In bevorzugter Weise werden die Zusatzinformationen mittels einer universal mobil transmitting system (UMTS) Verbindung übertragen. Dadurch werden die größeren Übertragungsraten dieses Mobilfunkstandards für das erfindugnsgemäße Verfahren ausgenutzt, um auch größere Datenmengen in ausreichenden Zeitdauern auf den Computer zu übertragen. UMTS verwendet dabei die Funktechnologie des Code Division Multiple Access (CDMA), mit der Übertragungsraten im Bereich von 300 bis 400 Kbit/s erreichbar sind. Dabei stellt UMTS offene und standadisierte Schnittstellen zur Verfügung und fungiert hauptsächlich als transparentes Übertragungsmedium.

In einer weiteren bevorzugten Ausgestaltung der vorliegenden Erfindung werden die Zusatzinformationen mittels einer asynchron transfer mode (ATM) Verbindung übertragen. Bei dieser Art von Kommunikationstechnologie werden die Informationen hauptsächlich in einer Richtung, und zwar vorliegend zum die Stamminformationen enthaltenen Computer übertragen, während der andere Kanal zum zentralen Computer - wenn überhaupt - mit geringerer Übertragungsrate arbeitet. Somit lassen sich gerade die Zusatzinformationen für das erfindungsgemäße Verfahren zum Vorführen von Informationen schnell auf den Computer übertragen. Die ATM-Struktur erlaubt Datenraten von bis 155 Mbit/s und stellt eine geeignete Übertragungsart für die vorliegende Erfindung dar.

Des weiteren können in bevorzugter Weise die Zusatzinformationen mittels eines softwarekonfigurierbaren Multistandard-Mobilfunksystems übertragen werden, das unterschiedliche Mobilkommunikationsstandards bedient. Für unterschiedliche Systemanforderungen können dabei digitale Implementierungen vorgesehen werden. Eine sehr flexible Anpassung an die unterschieldichen Standards wird somit gewährleistet. Dieses System wird auch als software radio based access sytem (SORBAS) bezeichnet. Der Vorteil der Nutzung des SORBAS-Systems im Rahmen der vorliegenden Erfindung liegt darin, daß bspw. ein sehr unabhängiges und somit auch länderübergreifendes Fahrgastinformationssystem realisiert werden kann.

Schließlich können in einer weiter bevorzugten Weise die Zusatzinformationen mittels einer general packet radio service (GPRS) Verbindung übertragen werden. Diese Art der Verbindung zeichnet sich dadurch aus, daß in einem global system mobil (GSM) Mobilfunknetz eine schnellere Datenübertragung dadurch ermöglicht wird, daß die zur Verfügung stehende Bandbreite einer Funkzelle des Funknetzes von einem Anwender für die paketorientierte Übertragung von Daten genutzt werden kann. Die Datenraten liegen dabei im Bereich von bis zu 100 Kbit/s pro Nutzer. Eine schnellere Übertragung der Zusatzinformationen bei der vorliegenden Erfindung ist somit die Folge.

Das zuvor beschriebene Verfahren ist in bevorzugter Weise bei bewegten Fahrzeugen anwendbar, wobei insbesondere Schienenfahrzeuge und Busse des öffentlichen Personenverkehrs für eine Anwendung des Verfahrens geeignet sind. Darüber hinaus kann das Verfahren auch angewendet werden, um an festen Standorten, wie beispielsweise an Haltestellen, Bahnhöfen oder Flughäfen, die Informationen vorzuführen.

Als Stamminformationen dienen beispielsweise Kurzfilme, Videokunst, Computeranimation, Trickfilme sowie jegliche Form von Werbeinformationen. Als Zusatzinformationen können beispielsweise Haltestelleninformationen, Umsteige- und Anschlußinformationen, insbesondere auch für eine Vernetzung mit anderen öffentlichen oder privaten Verkehrsmitteln, Wetternachrichten, Nachrichtenschlagzeilen, Börseninformationen, Veranstaltungshinweise, Bürgerinformationen oder Touristikinformationen übertragen werden. Die Zusatzinformationen werden dann derart mit den Stamminformationen verbunden, daß in Abhängigkeit von den Zusatzinformationen die auf Vorführvorrichtungen dargestellten Informationen verändert, insbesondere aktualisiert werden.

Die Stamminformationen werden vorzugsweise mit Hilfe einer Datenleitung über Telefon, einem lokalen Netzwerk oder mittels Datenträgeraustausch auf den Computer übertragen. Das bedeutet für die Anwendung bei Fahrzeugen, daß die Stammdaten während des Aufenthaltes an vorgegebenen Standorten, wie bspw. Betriebshöfen, auf den Computer im Fahrzeug übertragen werden. Für stationäre Anwendungen werden die Stammdaten bspw. mittels einer Telefonverbindung auf dem Computer gespeichert, während die Zusatzinformationen - bspw. während der Fahrt - über die Sende- und Empfangsvorrichtungen übertragen werden.

In bevorzugter Weise werden mit Hilfe der Zusatzinformationen die Inhalte der vorgeführten Informationen verändert, so daß beispielsweise die Daten eines Wetterberichtes mit Hilfe der Zusatzinformationen aktualisiert werden, der während eines vorgegebenen Zeitablaufes der vorgeführten Informationen in regelmäßigen Abständen vorgeführt wird.

In besonders bevorzugter Weise weisen die Zusatzinformationen zumindest teilweise ausführbare Anweisungen auf, die mit Hilfe des Computers interpretiert werden können. Somit werden Steuerbefehle auf den Computer übertragen, um nicht nur den Inhalt, sondern auch die zeitliche Reihenfolge der vorgeführten Informationen zu verändern. Dadurch wird der zeitlichen Ablauf der vorgeführten Informationen, also das Programm selbst, beeinflusst, um beispielsweise eine aktuelle Nachrichtenschlagzeile einzufügen. Eine große Aktualität der vorgeführten Informationen wird somit erreicht, ohne daß die Informationen des gesamten Programmes übertragen werden müssen.

In weiter bevorzugter Weise werden die als Zusatzinformationen übertragenen ausführbaren Anweisungen dazu verwendet, um objektorientierte Informationen im Computer entsprechend der Anweisungen zusammenzuführen und für die Vorführung vorzubereiten. Beispielsweise können im Computer abgespeicherte Objekte, die als Symbole für die Darstellung eines Wetterberichtes verwendet werden, entsprechend der übertragenen Anweisungen vom Computer zusammengeführt und für eine Vorführung vorbereitet werden. Somit wird mit einem Minimum an Zusatzinformationen eine hohe Qualität der dargestellten Informationen, beispielsweise eine filmähnliche Bildersequenz eines Wetterberichtes, produziert. Dabei sind die objektorientierten Informationen vorzugsweise als Stamminformationen auf dem Computer gespeichert, jedoch können diese auch als Zusatzinformationen übertragen werden.

Die bisher angeführten Beispiele beziehen sich darauf, daß die Stamm- und Zusatzinformationen zu bildlichen Informationen verarbeitet werden. Darüber hinaus läßt sich das erfindungsgemäße Verfahren auch für akustische Informationen oder auch für eine Kombination von bildlichen und akustischen Informationen nutzen.

In einer weiteren bevorzugten Ausgestaltung der vorliegenden Erfindung ist der Computer mit einem geographischen Positionierungssystem, insbesondere einem Global Positioning System (GPS) verbunden, so daß der Computer die Zusatzinformationen in Abhängigkeit von der geographischen Position des Fahrzeuges auswertet. Beispielsweise können somit Umsteige- und Anschlußinformationen in Abhängigkeit von der nächsten Haltestelle des Fahrzeuges aus den übertragenen Zusatzinformationen herausselektiert werden. Dazu kann in weiter bevorzugter Weise auf ein bereits bestehendes Fahrgastinformationssystem zurückgegriffen werden.

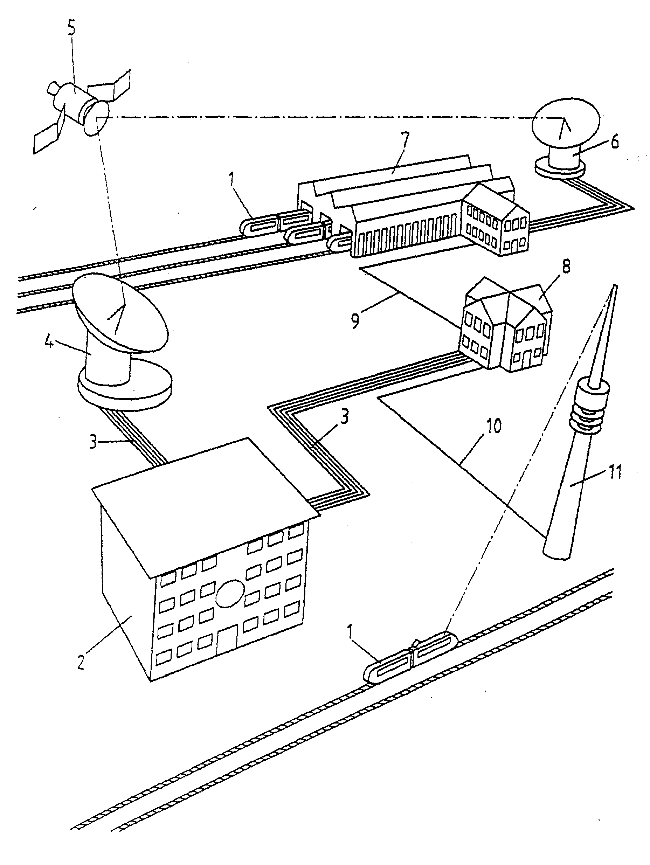

Im folgenden wird die Erfindung anhand eines Ausführungsbeispieles näher erläutert, wobei auf die beigefügte Zeichnung Bezug genommen wird. In der Zeichnung zeigt die einzige Figur ein Ausführungsbeispiel des erfindungsgemäßen Verfahrens zum Vorführen von Informationen in einem Schienenfahrzeug in einer schematischen perspektivischen Darstellung.

In einem Sendestudio 2 findet eine sogenannte Offline-Produktion statt, bei der alle Grundlagen für ein Programm einer vorgegebenen Zeiteinheit, beispielsweise ein tägliches Programm in Form von einzelnen Filmen erstellt. Vom Sendestudio 2 werden die vorgeplanten Informationen, beispielsweise Filmbeiträge, die Informationen aus Wirtschaft und Handel oder Werbeinformationen enthalten, über ein Intranet 3 an einen Sender 4 weitergegeben. Der Sender 4 überträgt die Informationen über einen Satelliten 5 und einen Empfänger 6 auf mindestens einen Betriebshof 7 des Betreibers der Schienenfahrzeuge 1. Im Betriebshof 7 werden die vom Sendestudio 2 empfangenen Informationen als Stamminformationen auf den im Schienenfahrzeug 1 angeordneten Computer (nicht dargestellt) übertragen. Somit findet eine Aktualisierung der Stamminformationen auf dem Computer während des Aufenthaltes des Schienenfahrzeuges 1 im Betriebshof 7 statt. Die Datenübertragung kann dabei mit Hilfe einer Datenleitung, einem lokalen Netzwerk oder mittels Datenträgeraustausch auf den Computer erfolgen.

Nachdem das Schienenfahrzeug 1 den Betriebshof 7 verlassen hat, werden die Stamminformationen auf Bildschirmgeräten (nicht dargestellt), die als Vorführvorrichtungen dienen, in einer vorprogrammierten Reihenfolge vorgeführt.

In einem zweiten Sendestudio 8, das im Ausführungsbeispiel getrennt vom ersten Sendestudio 2 ist und über das Intranet 3 ebenfalls die Stamminformationen vom ersten Sendestudio 2 erhält, werden aktuelle Informationen gesammelt und in Form von Graphikobjekten, Texten und Skripten zusammengestellt. Dazu werden zum einen allgemeine Informationen in Form von Nachrichten aus Politik und Handel sowie Wetterprognosen gesammelt. Zum anderen werden aktuelle Meldungen von dem Betriebshof 7 bzw. von allen Betriebshöfen 7 des Betreibers über ein Intranet 9 übertragen. Diese Meldungen beziehen sich bspw. auf Fahrplaninformationen, die insbesondere Verspätungsmeldungen von Schienenfahrzeugen 1 des Betreibers beinhalten können.

Die zusammengefaßten aktuellen Informationen werden auf einem Computer (nicht dargestellt) im Sendestudio 8 bereitgestellt, auf den über das Internet zugegriffen werden kann. Die Internetverbindung erfolgt dann über eine von einem Sender 11 erzeugte Mobilfunkkommunikation mit dem Schienenfahrzeug 1, wobei die Verbindung zwischen dem Sender 11 und dem Computer des Sendestudios 8 über eine terrestrische Leitung 10 erfolgt. Von diesem Computer aus werden die aktuellen Informationen als Zusatzinformationen auf das Schienenfahrzeug 1 insbesondere dann übertragen, wenn sie unterwegs sind, also sich außerhalb der Betriebshöfe 7 befinden.

Die Zusatzinformationen werden also zunächst auf einem Produktionsrechner einer Online-Produktion als Graphiken, Bilder, Texte und/oder Skripte erzeugt. Diese werden in einer für die Übertragung geeignete Form konvertiert und kodiert, so daß die Zusatzinformationen über das Internet weitergegeben werden können.

Der im Schienenfahrzeug 1 eingebaute Empfänger (nicht dargestellt) empfängt die ausgestrahlten Daten des Mobilfunks. Der Computer, der mit dem Empfänger verbunden ist, speichert den Datenstrom zwischen und analysiert diesen, um die relevanten Daten herauszufiltern. Diese Daten werden anschließend in die ursprünglichen Graphiken, Bilder, Texte und Skripte als Zusatzinformationen dekodiert.

Sofern es sich bei den Zusatzinformationen um Graphiken, Bilder oder Texte handelt, werden diese vom Computer an gegebenenfalls vorgegebenen Positionen in das laufende Programm eingefügt. Dabei kann es sich beispielsweise um aktuelle Nachrichten oder um Fahrgastinformationen handeln.

Die Zusatzinformationen können auch Skripte in einer vorgegebenen Skriptsprache enthalten, die vom Computer interpretiert, insbesondere auch laufzeitinterpretiert werden können. Somit erhält der Computer über den digitalen Rundfunk Steuerbefehle, um aktiv den Ablauf des Programmes der vorgeführten Informationen zu beeinflussen.

Zum einen kann eine derartige Beeinflussung beispielsweise darin bestehen, ein Graphik-, Film- oder Textobjekt aus dem Programm herauszunehmen oder in dieses einzufügen, so daß die zeitliche Reihenfolge der vorgeführten Informationen verändert wird. Zum anderen können die ausführbaren Anweisungen vom Computer derart interpretiert werden, daß als Stamminformationen gespeicherte Graphik-, Film- und/oder Textobjekte miteinander kombiniert werden, wie im folgenden anhand des Beispieles eines aktualisierten Wetterberichtes beschrieben wird.

Für die bildliche Darstellung eines Wetterberichtes ist eine begrenzte Anzahl von Symbolen wie beispielsweise eine Sonne, Wolken oder Temperaturangaben sowie Landkarten zur geographischen Anordnung der Symbole erforderlich. Sind diese verschiedenen Symbole als Objekte in den Stamminformationen im Computer abgespeichert, so können mit den ausführbaren Anweisungen, die als Zusatzinformationen übertragen worden sind, die verschiedenen Objekte so zusammengestellt werden, das filmähnlicher aktualisierter Wetterbericht mit festen und/oder sich bewegenden Symbolen für eine bestimmte Region auf den Bildschirmen im Schienenfahrzeug 1 dargestellt wird. Der zuletzt beschriebene Vorgang kann auch als objektorientierte Steuerung des Vorführens von Informationen in einem bewegten Fahrzeug bezeichnet werden.

## Patentansprüche

1. Verfahren zum Vorführen von Informationen,
- bei dem Stamminformationen auf einem Computer gespeichert werden, die danach auf mindestens einer Vorführvorrichtung vorgeführt werden,
- bei dem Zusatzinformationen mit Hilfe einer Sendevorrichtung und einer mit dem Computer verbundenen Empfangsvorrichtung auf den Computer übertragen werden,
- bei dem die Zusatzinformationen vom Computer ausgewertet werden und
- bei dem in Abhängigkeit von den Zusatzinformationen die auf der mindestens einen Vorführvorrichtung vorgeführten Informationen verändert werden,
**dadurch gekennzeichnet,**
**daß** die Zusatzinformationen über eine mittels einer mobilen Kommunikationseinrichtung erzeugten Verbindung mit dem Internet übertragen werden.

2. Verfahren nach Anspruch 1, **dadurch gekennzeichnet, daß** die Zusatzinformationen mittels einer universal mobil transmitting system (UMTS) Verbindung übertragen werden.

3. Verfahren nach Anspruch 1, **dadurch gekennzeichnet, daß** die Zusatzinformationen mittels einer asynchron transfer mode (ATM) Verbindung übertragen werden.

4. Verfahren nach Anspruch 1, **dadurch gekennzeichnet, daß** die Zusatzinformationen mittels eines softwarekonfigurierbaren Multistandard-Mobilfunksystem übertragen werden.

5. Verfahren nach Anspruch 1, **dadurch gekennzeichnet, daß** die Zusatzinformationen mittels einer general packet radio service (GPRS) Verbindung übertragen werden.

6. Verfahren nach einem der Ansprüche 1 bis 5, bei dem die Informationen in einem bewegten Fahrzeug vorgeführt werden und der Computer und die mindestens eine Vorführvorrichtung in dem Fahrzeug angeordnet werden.

7. Verfahren nach einem der Ansprüche 1 bis 6, bei dem die Stamminformationen mit Hilfe einer Datenleitung, einem lokalen Netzwerk oder mittels Datenträgeraustausch auf den Computer übertragen werden.

8. Verfahren nach einem der Ansprüche 1 bis 7, bei dem mit Hilfe der Zusatzinformationen die Inhalte der vorgeführten Informationen verändert werden.

9. Verfahren nach einem der Ansprüche 1 bis 8, bei dem die Zusatzinformationen zumindest teilweise ausführbare Anweisungen aufweisen, die mit Hilfe des Computers interpretiert werden.

10. Verfahren nach Anspruch 9, bei dem mit Hilfe der Zusatzinformationen die zeitliche Reihenfolge der vorgeführten Informationen verändert wird.

11. Verfahren nach Anspruch 9 oder 10, bei dem mit Hilfe der Zusatzinformationen objektorientierte Informationen zusammengefügt werden.

12. Verfahren nach Anspruch 11, bei dem die objektorientierten Informationen als Stamminformationen und/oder als Zusatzinformationen auf den Computer übertragen werden.

13. Verfahren nach einem der Ansprüche 1 bis 12, bei dem die Stamminformationen und Zusatzinformationen bildliche und/oder akustische Informationen sind.

14. Verfahren nach einem der Ansprüche 1 bis 13, bei dem der Computer mit einem geographischen Positionierungssystem verbunden ist und bei dem die Zusatzinformationen in Abhängigkeit von der geographischen Position des Fahrzeuges vom Computer ausgewertet werden.
